# EUROPÄISCHE PATENTANMELDUNG

(11) **EP 3 031 758 A1**
(43) Veröffentlichungstag der Anmeldung: **15.06.2016**
(21) Anmeldenummer: 14197214.1
(22) Anmeldetag: 10.12.2014
(51) Int. Cl.: B65H 19/30, B65H 75/08, B65H 75/22, B65H 75/24, B65H 75/18

(54) **Wickelwelle und Verfahren zum Einlegen einer Wickelwelle in eine Wickelvorrichtung**

(71) Anmelder: Reifenhäuser GmbH & Co. KG Maschinenfabrik, 53844 Troisdorf (DE)
(72) Erfinder: Meyer, Helmut, 53842 Troisdorf (DE)
(74) Vertreter: Wagner, Matthias

(57) **Zusammenfassung**

Die Erfindung betrifft eine Wickelwelle (1) mit einem Wickelkörper und an den Enden des Wickelkörpers angeordneten Wellenzapfen (11), die zum Einlegen in eine Wickelvorrichtung konfiguriert sind, wobei der Wickelkörper von einer stirnseitig offenen Wickelhülse (10) gebildet ist und die Wellenzapfen (11) jeweils einen Einführabschnitt (110) mit Spannmitteln aufweisen, mit welchem diese stirnseitig in die Wickelhülse (10) einführbar und lösbar mit der Wickelhülse (10) verspannbar sind und gemeinsam die Wickelwelle (1) ausbilden. Es wird ferner auch ein Verfahren zum Einlegen einer Wickelwelle (1) in eine Wickelvorrichtung angegeben.

## Beschreibung

Die Erfindung betrifft eine Wickelwelle mit einem Wickelkörper und an den Enden des Wickelkörpers angeordneten Wellenzapfen, die zum Einlegen in eine Wickelvorrichtung konfiguriert sind.

Ferner betrifft die Erfindung auch ein Verfahren zum Einlegen einer Wickelwelle in eine Wickelvorrichtung, wobei die Wickelwelle einen Wickelkörper und an den Enden des Wickelkörpers angeordnete Wellenzapfen aufweist, mit welchen sie in entsprechende Aufnahmen der Wickelvorrichtung eingelegt wird.

Wickelwellen zum Einlegen in eine Wickelvorrichtung z.B. zum Aufwickeln von bahnförmigem Material, wie Kunststofffolien-, Vlies- und Papierbahnen sind bekannt und weisen üblicherweise einen Wickelkörper mit an den Enden des Wickelkörpers angeordneten Wellenzapfen auf, die zum Einlegen in die Wickelvorrichtung konfiguriert sind und von beispielsweise entsprechenden Wickelarmen der Vorrichtung aufgenommen werden. Hierbei können die Wickelwellen mittelbar durch Reibkontakt zu einer Kontakt-walze oder auch unmittelbar durch einen auf die Wellenzapfen einwirkenden Drehantrieb in Rotation versetzt werden und das bahnförmige Wickelgut aufwickeln.

Derartige Wickelvorrichtungen sind beispielsweise aus der DE 40 39 048 C2 und der EP 1184312 A1 bekannt.

Die Aufwicklung erfolgt üblicherweise auf einem auf den Wickelkörper aufgeschobenen und mit geeigneten Spannmitteln drehmomentfest, aber lösbar fixierten Hülse z.B. aus Pappe, wie auch in der DE 86 04 891 U1 beschrieben. Hierbei ist es im Sinne einer so genannten Mehrnutzenwicklung auch möglich, mehrere nur über einen Teilabschnitt der axialen Länge des Wickelkörpers verlaufende Hülsen auf die Wickelwelle aufzubringen und das zugeführte Wickelgut bereits vorab entsprechend durch Längsschnitte auf die einzelnen Nutzen zu unterteilen.

Bekannte Wickelvorrichtungen zur Aufwicklung von Materialbahnen besonders großer Breite verwenden hingegen üblicherweise seitlich angeordnete Aufnahmen, z.B. Spanndorne, die durchgehend über die Breite verlaufende Wickelhülsen fixieren und das Drehmoment übertragen, wie es z.B. in der DE 1 574 438 A1 beschrieben ist. Solche Wickelhülsen zeigen bei den großen Wickelbreiten eine geringere Durchbiegungsneigung gegenüber einer massiven Wickelwelle mit aufgeschobener Hülse. Wickelvorrichtungen mit seitlich angeordneten Aufnahmen für durchgehende Wickelhülsen können jedoch üblicherweise keine Wickelwellen aufnehmen, so dass sie für eine Mehrnutzenwicklung nicht geeignet sind. Ferner muss beim Wickeln einer schmalen Materialbahn auf einer für die Wicklung von breiten Materialbahnen geeigneten Wickelvorrichtung eine unnötig breite Wickelhülse vorgehalten werden, die am fertigen Wickel weit vorsteht und Handhabungsschwierigkeiten verursacht.

Aufgabe der Erfindung ist es daher, Wickelwellen der eingangs genannten Art sowie Verfahren zum Einlegen einer Wickelwelle in Wickelvorrichtungen vorzuschlagen, die die Nachteile des Standes der Technik überwinden und eine größere Flexibilität bei der Aufwicklung von Materialbahnen bieten.

Zur Lösung der gestellten Aufgabe wird erfindungsgemäß eine Wickelwelle mit den Merkmalen des Patentanspruchs 1 vorgeschlagen.

Ein erfindungsgemäßes Verfahren zum Einlegen einer Wickelwelle in die Wickelvorrichtung ist Gegenstand des unabhängigen Verfahrensanspruchs 6.

Vorteilhafte Ausgestaltungen und Weiterbildungen der Erfindung sind Gegenstand der abhängigen Ansprüche.

Die Erfindung schlägt vor, eine Wickelwelle so auszubilden, dass der Wickelkörper von einer stirnseitig offenen Wickelhülse gebildet ist und die Wellenzapfen jeweils einen Einführabschnitt mit Spannmitteln aufweisen, mit welchen diese stirnseitig in die Wickelhülse einführbar und lösbar mit der Wickelhülse verspannbar sind und gemeinsam die Wickelwelle ausbilden. Eine solchermaßen aus Wickelhülse und lösbar an der Wickelhülse befestigten Wellenzapfen ausgebildete Wickelwelle gleicht in ihren Abmessungen einer bekannten Wickelwelle, ermöglicht jedoch auch auf breiten Wickelmaschinen das Aufwickeln von Mutterrollen auf einer durchgehenden Wickelhülse ohne Gefahr übermäßiger Durchbiegung und/oder extremes Gewicht der Wickelwelle.

Die entsprechende Wickelvorrichtung kann nach den bekannten Konstruktionsprinzipien einer Wickelvorrichtung für Wickelwellen gestaltet werden und ermöglicht unter Nutzung der erfindungsgemäßen Wickelwellen das Wickeln auf einer durchgehenden Hülse wie auch durch Einsatz einer konventionellen Wickelwelle mit darauf befestigten Wickelhülsen eine Mehrnutzenwicklung entsprechend den jeweiligen Anforderungen.

Nach einem Vorschlag der Erfindung wird die Wickelhülse aus einem insbesondere gegenüber Durchbiegung formstabilen Rohrabschnitt auf Basis von Metall, Pappe oder auch eines Kunststoffes, beispielsweise eines faserverstärkten Kunststoffes gebildet.

Nach einem weiteren Vorschlag der Erfindung werden die Spannmittel von im Bereich des Einführabschnittes angeordneten radial ein- und/oder ausfahrbaren Spannbacken gebildet, die in ausgefahrenem Zustand innenseitig an der Wickelhülse zur Anlage kommen. Hierbei kann das Ein- und Ausfahren der Spannbacken mittels Druckluft erfolgen, wie es bei konventionellen Wickelwellen, den so genannten Airshafts, zur Fixierung einer übergestülpten Wickelhülse aus Pappe oder dergleichen bekannt ist.

Die erfindungsgemäße Wickelwelle kann somit aus einer Wickelhülse und beidseitig mit ihren Einführabschnitten in die Stirnseiten der Wickelhülse eingeführten und verspannten Wellenzapfen vorkonfiguriert werden und anschließend wie eine konventionelle Wickelwelle in die Wickelvorrichtung eingelegt und gehandhabt werden.

Mit Vorteil ist zwischen dem Wellenzapfen und dem Einführabschnitt ein Übergangsabschnitt vorgesehen, dessen Außendurchmesser im Wesentlichen dem Außendurchmesser der Wickelhülse entspricht und der einen Anschlag für die Wickelhülse beim Einführen des Einführabschnittes ausbildet. Damit wird ein stets definiertes ausreichendes Einführen des Einführabschnittes in die stirnseitige Öffnung der Wickelhülse gewährleistet und andererseits kann der Übergangsabschnitt in unterschiedlichen Breiten hergestellt werden, so dass die Wickelhülse trotz einer vorhandenen großen Anlagenbreite der Wickelvorrichtung bei Bedarf auch an eine schmale Breite des aufzuwickelnden Wickelgutes angepasst werden kann. In diesem Falle werden die Übergangsabschnitte der Wellenzapfen entsprechend länger ausgebildet, so dass insgesamt wieder die für die jeweilige Wickelvorrichtung erforderliche Gesamtlänge der Wickelwelle erreicht wird.

Das erfindungsgemäße Verfahren zum Einlegen einer Wickelwelle in die Wickelvorrichtung beruht darauf, dass die Wickelwelle einen Wickelkörper und an den Enden des Wickelkörpers angeordnete Wellenzapfen aufweist, mit welchen sie in entsprechende Aufnahmen der Wickelvorrichtung eingelegt wird. Erfindungsgemäß wird vorgeschlagen, folgende Schritte zum Einlegen der Wickelwelle in die Wickelvorrichtung vorzunehmen:
a) Bereitstellen einer den Wickelkörper bildenden stirnseitig offenen Wickelhülse
b) Bereitstellen von einen Einführabschnitt mit Spannmitteln aufweisenden Wellenzapfen
c) Einführen des Einführabschnittes der Wellenzapfen in je eine stirnseitige Öffnung der Wickelhülse
d) Verspannen des eingeführten Einführabschnittes der Wellenzapfen in der Wickelhülse unter Ausbildung der Wickelwelle
e) Einlegen der Wickelwelle in die Wickelvorrichtung

Insoweit wird erfindungsgemäß eine Wickelwelle durch Bereitstellen der offenen Wickelhülse nach Maßgabe der Breite der aufzuwickelnden Materialbahn, Einführen und Verspannen der Wellenzapfen in den jeweiligen stirnseitigen Öffnungen der Wickelhülse ausgebildet und anschließend die solchermaßen gebildete Wickelwelle in die Wickelvorrichtung eingelegt.

Das Verspannen des Einführabschnittes in der Wickelhülse kann durch radiales Ausfahren von Klemmbacken aus dem Einführabschnitt an die Innenoberfläche der Wickelhülse bewirkt werden, wobei dies vorzugsweise pneumatisch bewirkt wird.

Weitere Ausgestaltungen und Einzelheiten der erfindungsgemäßen Wickelwelle werden nachfolgend anhand der ein Ausführungsbeispiel darstellenden Zeichnung näher erläutert. Es zeigen:
- Figur 1: im Teilschnitt eine Ansicht einer erfindungsgemäßen Wickelwelle;
- Figur 2: die Wickelhülse gemäß Figur 1;
- Figur 3: eine Wickelwelle nach dem Stand der Technik.

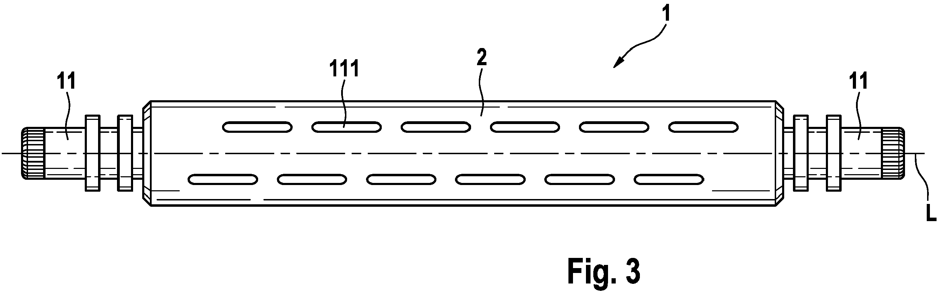

Aus der Figur 3 ist eine Wickelwelle gemäß dem Stand der Technik zum Einlegen in eine entsprechend ausgebildete Wickelvorrichtung dargestellt.

Eine solche Wickelwelle 1 umfasst einen Wickelköper 2 sowie zu beiden Enden des Wickelkörpers auf der Längsachse L angeordnete Wellenzapfen 11, die zum Einlegen in die Wickelvorrichtung konfiguriert sind. Der Wickelkörper 2 ist an sich zylindrisch ausgeführt und wird vor Inbenutzungnahme durch eine hier nicht dargestellte Wickelhülse aus Pappe oder dergleichen komplettiert, die in Richtung der Längsachse L einhüllend um den Wickelkörper 2 auf denselben aufgeschoben wird und durch pressluftbetriebene, radial aus dem Umfang des Wickelkörpers 2 ausfahrbare Klemmbacken 111 drehmomentfest auf der Wickelwelle fixiert.

Die solchermaßen fixierte Papphülse kann sowohl einteilig als auch mehrteilig ausgebildet sein, um eine so genannte Mehrnutzenwicklung zu ermöglichen.

Nach Abschluss des Wickelvorgangs wird die Wickelwelle gemeinsam mit dem auf der mindestens einen Wickelhülse ausgebildeten Wickel aus der Wickelvorrichtung entnommen und die Klemmbacken 111 werden durch Ablassen der eingebrachten Druckluft in den Umfang des Wickelkörpers 2 eingezogen, so dass anschließend die Wickelwelle 1 aus der mindestens einen Wickelhülse herausgezogen und für eine erneute Wicklung verwendet werden kann.

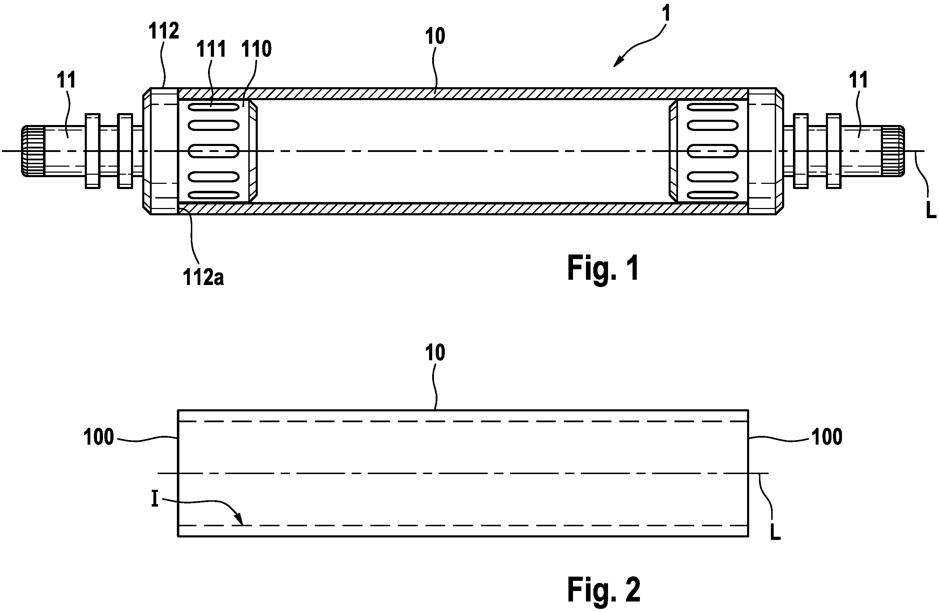

Aus den Figuren 1 und 2 ist eine erfindungsgemäße Wickelwelle 1 dargestellt, deren Außenkontur weitgehend mit der Wickelwelle aus dem Stand der Technik gemäß Figur 3 übereinstimmt, insbesondere sind die Wellenzapfen 11 übereinstimmend ausgeführt, so dass eine solche Wickelwelle 1 auch in einer Wickelvorrichtung verwendet werden kann, die für Wickelwellen gemäß Figur 3 konfiguriert ist.

Der Wickelkörper der Wickelwelle gemäß Figuren 1 und 2 wird von einer stirnseitig offenen Wickelhülse 10 z.B. aus Metall gebildet, die zur Aufwicklung einer Mutterrolle unmittelbar mit der aufzuwickelnden Materialbahn bewickelt wird, d.h. es wird keine weitere Hülse aus Pappe oder dergleichen als Kern übergestülpt.

Um eine solche Wickelhülse 10 mit stirnseitig offenen Enden 100 in einer Wickelvorrichtung für Wickelwellen gemäß der Ausführung in Figur 3 zu verwenden, werden die an den stirnseitigen Enden vorgesehenen Wellenzapfen 11 jeweils mit einem Einführabschnitt 110 ausgebildet, der in die stirnseitigen offenen Enden 100 der Wickelhülse 10 an beiden Enden derselben einführbar sind. Ein Übergangsabschnitt 112 zwischen dem Einführabschnitt 110 und dem Wellenzapfen 11 bildet dabei einen mit Bezugszeichen 112a gekennzeichneten Anschlag aus, an welchem das stirnseitige Ende der Wickelhülse 10 anliegt. In dieser aus der Figur 1 ersichtlichen eingeführten Position werden sodann die Einführabschnitte 110 durch radiales Ausfahren von Klemmbacken 111 aus dem Umfang des Einführabschnittes 10 an die Innenoberfläche I der Wickelhülse 10 drehmomentfest fixiert, wobei dieses Ausfahren in an sich bekannter Weise mittels Druckluft erfolgen kann, die z.B. über ein entsprechendes Ventil und eine innenliegende Druckluftleitung im Wellenzapfen 11 eingebracht werden kann.

Auf diese Weise wird eine vorübergehende lösbare Verbindung zwischen den beiden Wellenzapfen 11 über den jeweiligen Einführabschnitt 110 mit der Wickelhülse 10 geschaffen, wobei in diesem Zustand die Wickelhülse 10 gemeinsam mit den verspannten Wellenzapfen 11 eine Wickelwelle 1 entsprechend der Konfiguration der Wickelwelle gemäß Figur 3 ausbilden, so dass sie in eine entsprechend vorbereitete Wickelvorrichtung eingelegt werden können.

Nach Beendigung des Wickelvorgangs werden die Spannbacken durch Ablassen der eingebrachten Druckluft wieder in den Umfang der Einführabschnitte 110 eingefahren, so dass die drehmomentfeste Verbindung zwischen der Wickelhülse 10 und den Einführabschnitten 110 der Wellenzapfen 11 aufgehoben und Letztere aus den stirnseitigen Öffnungen 100 der Wickelhülse 10 entfernt werden können. Somit verbleibt dann die vereinzelte Wickelhülse 10 mitsamt des hier nicht dargestellten darauf aufgewickelten Wickels.

Es ist offensichtlich, dass durch Ausgestaltung der erfindungsgemäßen Wickelwelle ein Wickeln von Mutterrollen mit durchgehender Wickelhülse 10 auch in Wickelvorrichtungen durchgeführt werden kann, die an sich für die Aufnahme konventioneller Wickelwellen 1 gemäß dem Ausgestaltungsbeispiel der Figur 3 ausgebildet sind. Die Wickelvorrichtung bedarf daher keinerlei baulicher Veränderung und es kann flexibel auf die jeweilige Wickelaufgabe reagiert werden.

Sofern bei einer für große Wickelbreiten ausgelegten Wickelvorrichtung eine demgegenüber deutlich schmalere Materialbahn auf eine entsprechende Breite aufweisende Wickelhülse 10 aufgewickelt werden soll, ist es lediglich erforderlich, die Breite des Übergangsbereiches 112 entsprechend anzupassen, insbesondere zu vergrößern, so dass sich eine insgesamt gleich bleibende Gesamtlänge der Wickelwelle 1 einstellt, so dass unterschiedliche Wickelhülsenlängen zum Einsatz kommen können, ohne die Breite der Wickelvorrichtung verändern zu müssen.

Mit der erfindungsgemäßen Wickelwelle ist es möglich, in einer einzigen Wickelvorrichtung alternativ Wickelwellen oder Wickelhülsen zu verwenden. Während man durch Einsatz von Wickelwellen gemäß Figur 3 insbesondere in der Lage ist, Mehrnutzenwicklung durchzuführen, kann durch Verwendung einer Wickelwelle mit durchgehender Wickelhülse gemäß Figur 1 alternativ auch eine Mutterrolle großer Breite gewickelt werden.

## Patentansprüche

1. Wickelwelle (1) mit einem Wickelkörper und an den Enden des Wickelkörpers angeordneten Wellenzapfen (11), die zum Einlegen in eine Wickelvorrichtung konfiguriert sind, **dadurch gekennzeichnet, dass** der Wickelkörper von einer stirnseitig offenen Wickelhülse (10) gebildet ist und die Wellenzapfen (11) jeweils einen Einführabschnitt (110) mit Spannmitteln aufweisen, mit welchem diese stirnseitig in die Wickelhülse (10) einführbar und lösbar mit der Wickelhülse (10) verspannbar sind und gemeinsam die Wickelwelle (1) ausbilden.

2. Wickelwelle (1) nach Anspruch 1, **dadurch gekennzeichnet, dass** die Wickelhülse (10) aus einem Rohrabschnitt auf Basis von Metall, Kunststoff oder Pappe gebildet ist.

3. Wickelwelle (1) nach Anspruch 1 oder 2, **dadurch gekennzeichnet, dass** die Spannmittel von im Bereich des Einführabschnittes (110) angeordneten radial ein-und ausfahrbaren Spannbacken (111) gebildet sind, die in ausgefahrenem Zustand innenseitig an der Wickelhülse (10) zur Anlage kommen.

4. Wickelwelle (1) nach Anspruch 3, **dadurch gekennzeichnet, dass** die Spannbacken (111) mittels Druckluft ein- und/oder ausfahrbar sind.

5. Wickelwelle (1) nach einem der Ansprüche 1 bis 4, **dadurch gekennzeichnet, dass** zwischen dem Wellenzapfen (11) und dem Einführabschnitt (110) ein Übergangsabschnitt (112) vorgesehen ist, dessen Außendurchmesser im Wesentlichen dem Außendurchmesser der Wickelhülse entspricht und der einen Anschlag (112a) für die Wickelhülse (10) beim Einführen des Einführabschnittes (110) ausbildet.

6. Verfahren zum Einlegen einer Wickelwelle (1) in eine Wickelvorrichtung, wobei die Wickelwelle (1) einen Wickelkörper und an den Enden des Wickelkörpers angeordnete Wellenzapfen (11) aufweist, mit welchen Sie in entsprechende Aufnahmen der Wickelvorrichtung eingelegt wird, **gekennzeichnet durch** folgende Schritte:
a) Bereitstellen einer den Wickelkörper bildenden stirnseitig offenen Wickelhülse (10)
b) Bereitstellen von einen Einführabschnitt (110) mit Spannmitteln aufweisenden Wellenzapfen (11)
c) Einführen des Einführabschnittes (110) der Wellenzapfen (11) in je eine stirnseitige Öffnung (100) der Wickelhülse (10)
d) Verspannen des eingeführten Einführabschnittes (110) der Wellenzapfen (11) in der Wickelhülse (10) unter Ausbildung der Wickelwelle (1)
e) Einlegen der Wickelwelle (1) in die Wickelvorrichtung

7. Verfahren nach Anspruch 6, **dadurch gekennzeichnet, dass** das Verspannen des Einführabschnittes (110) in der Wickelhülse (10) durch radiales Ausfahren von Klemmbacken (111) aus dem Einführabschnitt (110) an die Innenoberfläche (I) der Wickelhülse (10) bewirkt wird.

8. Verfahren nach Anspruch 7, **dadurch gekennzeichnet, dass** das Verspannen pneumatisch bewirkt wird.
